# EUROPEAN PATENT APPLICATION

(11) **EP 4 451 793 A1**
(43) Date of publication of application: **23.10.2024**
(21) Application number: 21967707.7
(22) Date of filing: 16.12.2021
(51) Int. Cl.: H04W 84/06

(54) **INFORMATION ACQUISITION METHOD AND APPARATUS**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2021/138932
(87) International publication number: WO 2023/108572

(57) **Abstract**

Disclosed in the embodiments of the present disclosure are an information acquisition method and apparatus. The method comprises: a terminal receiving configuration information, wherein the configuration information is used for indicating at least one neighbor cell and corresponding satellite parameters thereof; and the neighbor cell and the corresponding satellite parameters thereof comprise at least one of the following: parameters required for mobility measurement; and parameters required for handover. In this way, the problem of a terminal acquiring configuration information of a required neighbor cell and corresponding satellite parameters thereof when performing RRM measurement on the neighbor cell can be effectively solved.

## Description

### TECHNICAL FIELD

The present disclosure relates to the field of communication technology, and particularly to a method and apparatus for obtaining information.

### BACKGROUND

In a Non-Terrestrial Networks (NTN) system, satellites may be on different orbits. In the NTN system, a terminal needs configuration information of different neighboring cells and satellite parameters corresponding to the neighboring cells in performing a Radio Resource Management (RRM) and a mobility measurement of the neighboring cells.

### SUMMARY

Embodiments of the disclosure provide methods and an apparatuses for obtaining information, which may effectively solve a problem of how to obtain configuration information of neighboring cell(s) and satellite parameter(s) corresponding to the neighboring cell(s) required by a terminal in performing a Radio Resource Management (RRM) process.

According to a first aspect, embodiments of the disclosure provide a method for obtaining information. The method includes: receiving configuration information by a User Equipment (UE); in which the configuration information is used to indicate at least one neighboring cell and a satellite parameter corresponding to the at least one neighboring cell;
in which the neighboring cell and the satellite parameter corresponding to the neighboring cell include at least one of:
a parameter required for performing a mobility measurement; or
a parameter required for performing a handover.

By implementing embodiments of the disclosure, the problem of how to obtain the configuration information of neighboring cell(s) and satellite parameter(s) corresponding to the neighboring cell(s) required by the terminal in performing the RRM measurement on the neighboring cell(s) may be effectively solved.

According to a second aspect, embodiments of the disclosure provide a method for obtaining information. The method includes: sending, by a network device of a Non-Terrestrial Network (NTN), configuration information; in which the configuration information is used to indicate at least one neighboring cell and a satellite parameter corresponding to the at least one neighboring cell;
in which the neighboring cell and the satellite parameter corresponding to the neighboring cell include at least one of:
a parameter required for performing a mobility measurement; or
a parameter required for performing a handover.

According to a third aspect, embodiments of the disclosure provide a communication apparatus. The communication apparatus has some or all of functions of the terminal in the method according to the first aspect. For example, functions of the communication apparatus may include functions in some or all of embodiments of the disclosure or may have functions of separately implementing any embodiment of the disclosure. The function may be implemented by a hardware or may be implemented by executing a corresponding software through a hardware. The hardware or the software includes one or more units for modules corresponding to the foregoing functions.

In an implementation, a structure of the communication apparatus may include a transceiver module and a processing module. The processing module is configured to support the communication apparatus in performing corresponding functions of the foregoing method. The transceiver module is configured to support communications between the communication apparatus and another device. The communications apparatus may further include a storage module. The storage module is configured to be coupled to the transceiver module and the processing module and store a computer program and data that are necessary for the communications apparatus.

As an example, the processing module may be a processor. The transceiver module may be a transceiver or a communication interface. The storage module may be a memory.

In an implementation, the communication apparatus includes: a transceiver module configured to receive configuration information, in which the configuration information is used to indicate at least one neighboring cell and a satellite parameter corresponding to the at least one neighboring cell, and the neighboring cell and the satellite parameter corresponding to the neighboring cell include at least one of:
a parameter required for performing a mobility measurement; or
a parameter required for performing a handover.

According to a fourth aspect, embodiments of the disclosure provide another communication apparatus. The communication apparatus has some or all of functions of the network device in the method example according to the second aspect. For example, functions of the communication apparatus may include functions in some or all of embodiments of the disclosure or may have functions of separately implementing any embodiment of the disclosure. The function may be implemented by a hardware or may be implemented by executing a corresponding software through a hardware. The hardware or the software includes one or more units for modules corresponding to the foregoing functions.

In an implementation, a structure of the communication apparatus may include a transceiver module and a processing module. The processing module is configured to support the communication apparatus in performing corresponding functions of the foregoing method. The transceiver module is configured to support communications between the communication apparatus and another device. The communications apparatus may further include a storage module. The storage module is configured to be coupled to the transceiver module and the processing module and store a computer program and data that are necessary for the communications apparatus.

In an implementation, the communication apparatus includes: a transceiver module configured to send configuration information; in which the configuration information is used to indicate at least one neighboring cell and a satellite parameter corresponding to the at least one neighboring cell, and the neighboring cell and the satellite parameter corresponding to the neighboring cell include at least one of:
a parameter required for performing a mobility measurement; or
a parameter required for performing a handover.

According to a fifth aspect, embodiments of the disclosure provide a communication apparatus. The communication apparatus includes a processor. When the processor calls a computer program in a memory, the method according to the first aspect is performed.

According to a sixth aspect, embodiments of the disclosure provide a communication apparatus. The communication apparatus includes a processor. When the processor calls a computer program in a memory, the method according to the second aspect is performed.

According to a seventh aspect, embodiments of the disclosure provide a communication apparatus. The communication apparatus includes a processor and a memory. The memory stores a computer program. When the processor executes the computer program stored in the memory, the communication apparatus is caused to perform the method according to the first aspect.

According to an eighth aspect, embodiments of the disclosure provide a communication apparatus. The communication apparatus includes a processor and a memory. The memory stores a computer program. When the processor executes the computer program stored in the memory, the communication apparatus is caused to perform the method according to the second aspect.

According to a ninth aspect, embodiments of the disclosure provide a communication apparatus. The communication apparatus includes a processor and an interface circuit. The interface circuit is configured to receive code instructions and transmit the code instructions to the processor. The processor is configured to run the code instructions to cause the apparatus to perform the method according to the first aspect.

According to a tenth aspect, embodiments of the disclosure provide a communication apparatus. The communication apparatus includes a processor and an interface circuit. The interface circuit is configured to receive code instructions and transmit the code instructions to the processor. The processor is configured to run the code instruction to cause the apparatus to perform the method according to the second aspect.

According to an eleventh aspect, embodiments of the disclosure provide a communication system. The system includes the communication apparatus according to the third aspect and the communication apparatus according to the fourth aspect, or the system includes the communication apparatus according to the fifth aspect and the communication apparatus according to the sixth aspect, or the system includes the communication apparatus according to the seventh aspect and the communication apparatus according to the eighth aspect, or the system includes the communication apparatus according to the ninth aspect and the communication apparatus according to the tenth aspect.

According to a twelfth aspect, embodiments of the disclosure provide a computer-readable storage medium, configured to store instructions usable by the terminal. When the instructions are executed, the terminal is caused to perform the method according to the first aspect.

According to a thirteenth aspect, embodiments of the disclosure provide a readable storage medium, configured to store instructions executable by the network device. When the instructions are executed, the network device is caused to perform the method according to the second aspect.

According to a fourteenth aspect, the disclosure further provides a computer program product including a computer program. When the computer program product is running on a computer, the computer is caused to perform the method according to the first aspect.

According to a fifteenth aspect, the disclosure further provides a computer program product including a computer program. When the computer program product is running on a computer, the computer is caused to perform the method according to the second aspect.

According to a sixteenth aspect, the disclosure provides a chip system. The chip system includes at least one processor and an interface and is configured to support the terminal device in implementing functions involved in the first aspect, for example, determining or processing at least one of data or information related to the foregoing methods. In a possible implementation, the chip system further includes a memory, and the memory is configured to store a computer program and data that are necessary for the terminal device. The chip system may include a chip, or may include a chip and another discrete component.

According to a seventeenth aspect, the disclosure provides a chip system. The chip system includes at least one processor and an interface and is configured to support a network device in implementing functions involved in the second aspect, for example, determining or processing at least one of data or information related to the foregoing methods. In a possible implementation, the chip system further includes a memory, and the memory is configured to store computer programs and data that are necessary for the network device. The chip system may include a chip, or may include a chip and another discrete component.

According to an eighteenth aspect, the disclosure provides a computer program. When the computer program is running on a computer, the computer is caused to perform the method according to the first aspect.

According to a nineteenth aspect, the disclosure provides a computer program. When the computer program is running on a computer, the computer is caused to perform the method according to the second aspect.

### BRIEF DESCRIPTION OF THE DRAWINGS

To describe technical solutions in embodiments of the disclosure or the Background more clearly, the following describes accompanying drawings required in embodiments or the Background of the disclosure.
FIG. 1 is a diagram illustrating an architecture of a communication system according to embodiments of the disclosure.
FIG. 2 is a flowchart illustrating a method for obtaining information according to embodiments of the disclosure.
FIG. 3 is a flowchart illustrating another method for obtaining information according to embodiments of the disclosure.
FIG. 4 is a flowchart illustrating still another method for obtaining information according to embodiments of the disclosure.
FIG. 5 is a flowchart illustrating yet another method for obtaining information according to embodiments of the disclosure.
FIG. 6 is a flowchart illustrating yet another method for obtaining information according to embodiments of the disclosure.
FIG. 7 is a block diagram illustrating a communication apparatus according to embodiments of the disclosure.
FIG. 8 is a block diagram illustrating another communication apparatus according to embodiments of the disclosure.
FIG. 9 is a block diagram illustrating a chip according to embodiments of the disclosure.

### DETAILED DESCRIPTION

For ease of understanding, terms involved in the disclosure are introduced first.

### Global Navigation Satellite System (GNSS)

The GNSS refers to any satellite navigation system, including global, regional and enhanced satellite navigation systems, such as GPS of United States, Glonass of Russia, Galileo of European, Beidou satellite navigation system of China, and related enhancement systems, such as wide area augmentation system (WAAS) of United States, European geostationary navigation overlay system (EGNOS) of European and multifunctional satellite augmentation system (MSAS) of Japan, etc., as well as other satellite navigation systems to be built later.

In order to better understand methods for obtaining information according to embodiments of the disclosure, a communication system to which embodiments of the disclosure are applicable will be described first as follows.

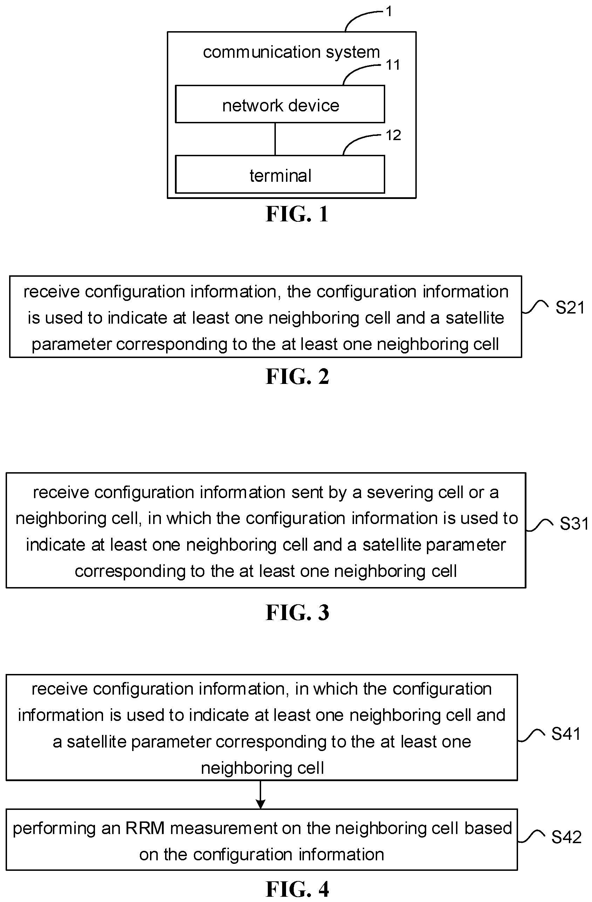

As illustrated in FIG. 1, FIG. 1 is a diagram illustrating an architecture of a communication system 1 according to embodiments of the disclosure. The communication system may include, but is not limited to, one network device and one terminal. The number and form of devices illustrated in FIG. 1 are merely examples and are not used to limit embodiments of the disclosure. In the actual application, there may include two or more network devices and two or more terminals. As illustrated in FIG. 1, the communication system 1 includes for example one network device 11 and one terminal 12.

It is noteworthy that technical solutions according to embodiments of the disclosure may be applied to various communication systems, such as a long term evolution (LTE) system, a 5th generation (5G) mobile communication system, a 5G new radio (NR) system, or another future new mobile communication system.

The network device 11 in embodiments of the disclosure is an entity on a network side used to send or receive a signal. For example, the network device 101 may be an evolved NodeB (eNB), a transmission reception point (TRP), a next generation NodeB (gNB) in an NR system, a base station in a future mobile communication system or an access node in a wireless fidelity (WiFi) system. Specific technologies and specific device forms adopted by the network device are not limited in embodiments of the disclosure. The network device according to embodiments of the disclosure may be composed of a central unit (CU) and distributed units (DUs). The CU may also be referred to as a control unit. A structure of CU-DU may separate a protocol layer of the network device, such as a protocol layer of the base station, and functions of a part of the protocol layer is controlled in the CU, and functions of remaining part or all of the protocol layer is distributed in the DUs. The DUs are controlled by the CU.

The terminal 12 in embodiments of the disclosure is an entity on a user side used to receive or send a signal, such as a mobile phone. The terminal device may also be referred to as a terminal, a user equipment (UE), a mobile station (MS), a mobile terminal (MT), or the like. The terminal device may be a vehicle having a communication function, an intelligent vehicle, a mobile phone, a wearable device, a pad, a computer with a wireless transceiver function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in a transportation safety, a wireless terminal device in a smart city, a wireless terminal device in a smart home, or the like. Specific technologies and specific device forms adopted by the terminal device are not limited in embodiments of the disclosure.

It is understandable that the communication system described in embodiments of the disclosure are intended to explain the technical solutions according to embodiments of the disclosure more clearly and do not constitute a limitation to the technical solutions according to embodiments of the disclosure. The ordinary skill in the art may know that, with evolution of system architecture and emergence of new business scenarios, the technical solutions according to embodiments of the disclosure are equally applied to similar technical issues.

The methods and apparatuses for obtaining information according to the disclosure will be described in detail with reference to the accompanying drawings.

As illustrated in FIG. 2, FIG. 2 is a flowchart illustrating a method for obtaining information according to embodiments of the disclosure.

As illustrated in FIG. 2, the method is performed by a terminal. The method may include, but is not limited to, the following.

At S21, configuration information is received, in which the configuration information is used to indicate at least one neighboring cell and satellite parameter(s) corresponding to the at least one neighboring cell.

In embodiments of the disclosure, the terminal receives the configuration information sent by a network device, in which the configuration information is used to indicate the at least one neighboring cell and the satellite parameter(s) corresponding to the at least one neighboring cell, so that the terminal may obtain the neighboring cell(s) and the satellite parameter(s) correspodnding to the neighboring cell(s).

In embodiments of the disclosure, the neighboring cell refers to another satellite covering an earth surface area adjacent to a geographic space of a serving cell. The serving cell is a cell corresponding to a satellite that is currently establishing a connection with the terminal. In implementations of the disclosure, the network device may be a device in an NTN network. That is, in a possible implementation, the network device may be a satellite.

For example, the configuration information may indicate one or more neighboring cells and satellite parameters corresponding to each neighboring cell.

In some embodiments, the satellite parameters corresponding to the neighboring cell include at least one of:
parameters required for performing a mobility measurement; or
parameters required for performing a handover.

It is understandable that the terminal receives the configuration information from the network device, in which the at least one neighboring cell and the satellite parameters corresponding to the at least one neighboring cell indicated by the configuration information include the parameters required for performing the mobility measurement. Therefore, when the terminal receives the configuration information used for performing the mobility measurement configured by the network device, the terminal may obtain the parameters required for performing the mobility measurement, to perform the mobility measurement.

It is understandable that the terminal receives the configuration information from the network device, in which the at least one neighboring cell and the satellite parameters corresponding to the at least one neighboring cell indicated by the configuration information include the parameter required for performing the handover. Therefore, when the terminal receives the configuration information used for performing the handover cell configured by the network device, the terminal may obtain the parameters required for performing a cell handover, to perform a cell handover measurement.

In some embodiments, the parameters required for performing the mobility measurement include at least one of the following:
ephemeris information of a satellite corresponding to the neighboring cell;
an ephemeris information format of the satellite corresponding to the neighboring cell;
a network-controlled common timing advance (TA);
timer information;
frequency compensation information; or
a polarization mode.

In some possible implementations, the timer may be an NTN ephemeris validaity timer for determining relevant ephemeris information of the neighboring cell, such as a validity duration of the ephemeris information of the neighboring cell. In some possible implementations, the timer may be started/restarted within a validity period configured by an epoch time of auxiliary information (such as serving satellite ephemeris data).

The ephemeris information and the ephemeris information format of the satellite corresponding to the neighboring cell may include one or more of: a position, velocity and time (PVT) format or an orbital parameter format.

For example, the timer information may include one or more of: timer configuration information for the validity of the ephemeris information or timer configuration information that may be used for a neighboring cell measurement.

For example, the frequency compensation information may include one or more of: information for compensating for a frequency offset of a service link (from the satellite to the terminal) caused by a Doppler effect.

For example, the polarization mode may include one or more of: a right hand circular polarization (RHCP) mode, a left hand circular polarization (LHCP) mode, or a linear polarization mode.

In some embodiments, the parameters required for performing the handover include at least one of the following:
ephemeris information of a satellite corresponding to the neighboring cell;
ephemeris information format of a satellite corresponding to the neighboring cell;
a common TA;
timer information;
frequency compensation information;
a polarization mode; or
an uplink transmission timing offset K offset.

Examples of the ephemeris information of the satellite corresponding to the neighboring cell, the ephemeris information format, the common TA, the timer information, the frequency compensation information, and the polarization mode may be referred to descriptions of foregoing embodiments, which are not repeated herein.

For example, the uplink transmission timing offset K offset may include one or more of: a transmission timing relation for determining a Hybrid Automatic Repeat reQuest (HARQ) feedback.

By implementing embodiments of the disclosure, the configuration information is received, in which the configuration information is used to indicate the at least one neighboring cell and the satellite parameters corresponding to the at least one neighboring cell. Therefore, the problem of how to obtain the configuration information of the neighboring cell(s) and the satellite parameters corresponding to the neighboring cell(s) required by the terminal in performing the RRM measurement on the neighboring cell may be effectively solved.

As illustrated in FIG. 3, FIG. 3 is a flowchart illustrating another method for obtaining information according to embodiments of the disclosure.

As illustrated in FIG. 3, the method is performed by a terminal and the method may include, but is not limited to, the following.

At S31, configuration information sent by a severing cell or a neighboring cell is received, in which the configuration information is used to indicate at least one neighboring cell and satellite parameters corresponding to the at least one neighboring cell.

In embodiments of the disclosure, receiving, by the terminal, the configuration information sent by the network device may include receiving the configuration information sent by the network device corresponding to the serving cell or receiving the configuration information sent by the network device corresponding to the neighboring cell.

In all embodiments of the disclosure, the UE may receive the configuration information of the neighboring cell from the serving cell. In some scenarios, the UE in the NTN network may directly read a System Information Block (SIB) of the neighboring cell of the NTN network. For example, when the serving cell does not send the configuration information of the neighboring cell, the UE directly reads the SIB of the neighboring cell in the NTN network. The SIB includes the configuration information, or the SIB is the configuration information.

In some embodiments, receiving the configuration information sent by the network device corresponding to the serving cell includes:
receiving first configuration information sent, in a broadcasting manner, by the network device corresponding to the serving cell, in which the terminal is in a Radio Resource Control (RRC) idle state or an RRC-inactive state, and the first configuration information is used to indicate the at least one neighboring cell and the satellite parameters corresponding to the at least one neighboring cell.

In embodiments of the disclosure, when the terminal is in the RRC idle state or the RRC-inactive state, the first configuration information sent in the broadcasting manner by the network device corresponding to the serving cell is received. The first configuration information may be an SIB x, where x is a positive integer. The SIB x may be an existing system message or a newly defined system information. For example, in an embodiment of the disclosure, the SIB x may be an existing SIB 1.

In some embodiments, receiving the configuration information sent by the network device corresponding to the serving cell includes:
receiving second configuration information sent, based on RRC configuration parameters, by the network device corresponding to the serving cell, in which the terminal is in an RRC connected state, and the second configuration information is used to indicate the at least one neighboring cell and the satellite parameters corresponding to the at least one neighboring cell.

In embodiments of the disclosure, when the terminal is in the RRC connected state, the second configuration information sent, based on an RRC configuration, by the network device corresponding to the serving cell is received. The second configuration information may be an information element (IE) of the RRC signaling, such as MeasObjectNR.

In some embodiments, in response to receiving the first configuration information and the second configuration information, the RRM measurement is performed on the neighboring cell based on the second configuration information.

In embodiments of the disclosure, when the terminal is in the RRC idle state or the RRC-inactive state, the terminal receives the first configuration information sent, in the broadcasting manner, by the network device of the serving cell. When the terminal is in the RRC connected state, the terminal receives the second configuration information sent, based on the RRC configuration, by the network device of the serving cell. The terminal receives the at least one neighboring cell and the satellite parameters corresponding to the at least one neighboring cell indicated by the first configuration information and the at least one neighboring cell and the satellite parameters corresponding to the at least one neighboring cell indicated by the second configuration information. Therefore, the terminal has not only the first configuration information but also the second configuration information, and then the terminal performs the RRM measurement on the neighboring cell based on the at least one neighboring cell and and the satellite parameters corresponding to the at least one neighboring cell indicated by the second configuration information.

In some embodiments, receiving the configuration information sent by the network device of the neighboring cell includes:
receiving configuration information of a neighboring carrier of the neighboring cell.

In embodiments of the disclosure, receiving, by the terminal, the configuration information sent by the network device of the neighboring cell may include obtaining the information of the at least one neighboring cell and the satellite parameters corresponding to the at least one neighboring cell by receiving the SIB message of the neighboring carrier of the neighboring cell. In embodiments of the disclosure, the neighboring carrier refers to a carrier used by the neighboring cell.

In some embodiments, the neighboring cell and the satellite parameters corresponding to the neighboring cell include at least one of the following:
parameters required for performing a mobility measurement; or
parameters required for performing a handover.

In some embodiments, the parameters required for performing the mobility measurement include at least one of the following:
ephemeris information of a satellite corresponding to the neighboring cell;
an ephemeris information format of the satellite corresponding to the neighboring cell;
a network-controlled common TA;
timer information;
frequency compensation information; or
a polarization mode.

In some embodiments, the parameters required for performing the handover include at least one of the following:
ephemeris information of the satellite corresponding to the neighboring cell;
ephemeris information format of the satellite corresponding to the neighboring cell;
a common TA;
timer information;
frequency compensation information;
a polarization mode; or
an uplink transmission timing offset K_offset.

In embodiments of the disclosure, examples of the ephemeris information of the satellite corresponding to the neighboring cell, the ephemeris information format, the common TA, the timer information, the frequency compensation information, the polarization mode, and the uplink transmission timing offset K_offset may be referred to the descriptions of foregoing embodiments, which are not repeated herein.

As illustrated in FIG. 4, FIG. 4 is a flowchart illustraging still another method for obtaining information according to embodiments of the disclosure.

As illustrated in FIG. 4, the method is performed by a terminal. The method may include, but is not limited to, the following.

At S41, configuration information is received, in which the configuration information is used to indicate at least one neighboring cell and satellite parameters corresponding to the at least one neighboring cell.

At S42, an RRM measurement is performed on the neighboring cell based on the configuration information.

In some embodiments, the neighboring cell and the satellite parameters corresponding to the neighboring cell include at least one of the following:
parameters required for performing a mobility measurement; or
parameters required for performing a handover.

In embodiments of the disclosure, the configuration information received by the terminal indicates the at least one neighboring cell and the satellite parameters corresponding to the at least one neighboring cell required for performing the mobility measurement, such that the terminal may perform the mobility measurement on the neighboring cell based on the configuration information.

In embodiments of the disclosure, the configuration information received by the terminal indicates the at least one neighboring cell and the satellite parameters corresponding to the at least one neighboring cell required for performing the cell handover, such that the terminal may perform the cell handover measurement on the neighboring cell based on the configuration information.

In some embodiments, the parameters required by performing the mobility measurement include at least one of the following:
ephemeris information of a satellite corresponding to the neighboring cell;
an ephemeris information format of the satellite corresponding to the neighboring cell;
a network-controlled common TA;
timer information;
frequency compensation information; or
a polarization mode.

In some embodiments, the parameters required for performing the handover include at least one of the following:
ephemeris information of a satellite corresponding to the neighboring cell;
an ephemeris information format of the satellite corresponding to the neighboring cell;
a common TA;
timer information;
frequency compensation information;
a polarization mode; or
an uplink transmission timing offset K_offset.

In embodiments of the disclosure, examples of the ephemeris information of the satellite corresponding to the neighboring cell, the ephemeris information format of the satellite corresponding to the neighboring cell, the common TA, the timer information, the frequency compensation information, the polarization mode, and the uplink transmission timing offset K offset may be referred to the descriptions of foregoing embodiments, which are not repeated herein.

It is noteworthy that steps S41 and S 42 may be implemented separately, or may be implemented together with any other step in embodiments of the disclosure, such as the steps S21 and/or S31 in embodiments of the disclosure, which is not limited in embodiments of the disclosure.

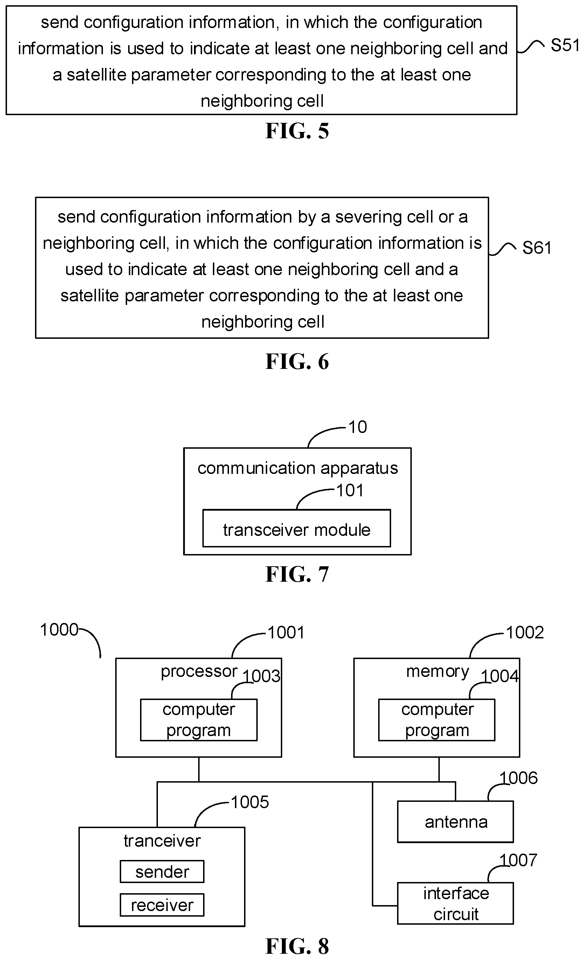

As illustrated in FIG. 5, FIG. 5 is a flowchart illustrating yet another method for obtaining information according to embodiments of the disclosure.

As illustrated in FIG. 5, the method is performed by a network device. The method may include, but is not limited to, the following.

At S51, configuration information is sent, in which the configuration information is used to indicate at least one neighboring cell and satellite parameters corresponding to the at least one neighboring cell.

In embodiments of the disclosure, the network device sends the configuration information to a terminal, in which the configuration information is used to indicate the at least one neighboring cell and the satellite parameters corresponding to the at least one neighboring cell, so that the terminal may obtain the neighboring cell(s) and the satellite parameters corresponding to the neighboring cell(s). In implementations of the disclosure, the network device is a device in an NTN network. That is, in a possible implementation, the network device may be a satellite.

In some embodiments, the neighboring cell and the satellite parameters corresponding to the neighboring cell include at least one of the following:
parameters required for performing a mobility measurement; or
parameters required for performing a handover.

It is understandable that the network device sends the configuration information, in which the configuration information indicates the neighboring cell and the satellite parameters corresponding to the neighboring cell required for the mobility measurement, so that when the terminal receives the configuration information used for performimg the mobility measurement configured by the network device, the terminal may obtain the parameters required for performing the mobility measurement, to perform the mobility measurement.

It is understandable that the network device sends the configuration information, in which the configuration information indicates the neighboring cell and the satellite parameters corresponding to the neighboring cell required for performing the the handover, so that when the terminal receives the configuration information used for performing the handover cell measurement configured by the network device, the terminal may obtain the parameters required for performing the cell handover, to perform a cell handover measurement.

In some embodiments, the parameters required for perfomring the mobility measurement include at least one of the following:
ephemeris information of a satellite corresponding to the neighboring cell;
an ephemeris information format of the satellite corresponding to the neighboring cell;
a network-controlled common TA;
timer information;
frequency compensation information; or
a polarization mode.

In some embodiments, the parameters required for performing the handover include at least one of the following:
ephemeris information of the satellite corresponding to the neighboring cell;
an ephemeris information format of the satellite corresponding to the neighboring cell;
a common TA
timer information;
frequency compensation information;
a polarization mode; or
an uplink transmission timing offset K_offset.

In embodiments of the disclosure, examples of the ephemeris information of the satellite corresponding to the neighboring cell, the ephemeris information format of the satellite corresponding to the neighboring cell, the common TA, the timer information, the frequency compensation information, the polarization mode, and the uplink transmission timing offset K offset may be referred to the descriptions of other embodiments, which are not repeated herein.

By implementing embodiments of the disclosure, the configuration information is sent, in which the configuration information is used to indicate the at least one neighboring cell and the satellite parameters corresponding to the at least one neighboring cell. Therefore, the problem of how to obtain the configuration information of the neighboring cells and the satellite parameters corresponding to the neighboring cells required in performing the RRM measurement on the neighboring cell may be effectively solved.

As illustrated in FIG. 6, FIG. 6 is a flowchart illustrating yet another method for obtaining information according to embodiments of the disclosure.

As illustrated in FIG. 6, the method is performed by a network device. The method may include, but is not limited to, the following.

At S61, configuration information is sent by a severing cell or a neighboring cell, in which the configuration information is used to indicate at least one neighboring cell and satellite parameters corresponding to the at least one neighboring cell.

In some embodiments, the neighboring cell and the satellite parameters corresponding to the neighboring cell include at least one of the following:
parameters required for performing a mobility measurement; or parameters required for performing a handover.

In some embodiments, the parameters required for performing the mobility measurement includes at least one of the following:
ephemeris information of a satellite corresponding to the neighboring cell;
an ephemeris information format of the satellite corresponding to the neighboring cell;
a network-controlled common TA;
timer information;
frequency compensation information; or
a polarization mode.

In some embodiments, the parameters required for performing the handover include at least one of the following:
ephemeris information of the satellite corresponding to the neighboring cell;
an ephemeris information format of the satellite corresponding to the neighboring cell;
a common TA;
timer information;
frequency compensation information;
a polarization mode; or
an uplink transmission timing offset K offset.

In embodiments of the disclosure, examples of the ephemeris information of the satellite corresponding to the neighboring cell, the ephemeris information format of the satellite corresponding to the neighboring cell, the common TA, the timer information, the frequency compensation information, the polarization mode, and the uplink transmission timing offset K offset may be referred to the descriptions of other embodiments, which are not repeated herein.

In some embodiments, sending the configuration information by the serving cell includes:
sending first configuration information by the serving cell in a broadcasting manner, in which the terminal is in an RRC idle state or an RRC-inactive state, and the first configuration information at least includes the configuration information.

In some embodiments, the method further includes:
sending second configuration information by the serving cell based on an RRC configuration, in which the terminal is in an RRC connected state or the RRC-inactive state, and the second configuration information at least includes the configuration information.

In some embodiments, sending the configuration information by the neighboring cell includes:
sending the configuration information by the neighboring cell through a neighboring carrier.

For related descriptions of embodiments of the disclosure, reference may be made to the description of other embodiments, which are not be repeated here.

In above embodiments of the disclosure, the methods are described from the perspective of the network device and the terminal respectively. In order to implement functions in the methods according to embodiments of the disclosure, the network device and the terminal each may include a hardware structure and a software module such that the foregoing functions are implemented in the form of the hardware structure, the software module, or the hardware structure plus the software module. Some of the functions described above may be performed in the hardware structure, the software module, or the hardware structure plus the software module.

As illustrated in FIG. 7, FIG. 7 is a block diagram illustrating a communication apparatus 10 according to embodiments of the disclosure. The communication apparatus 10 as illustrated in FIG. 7 may include a transceiver module 101. The transceiver module 101 may include a sending module and/or a receiving module. The sending module is configured to implement a sending function. The receiving module is configured to implement a receiving function. The transceiver module 101 may implement the sending function and/or the receiving function.

The communication apparatus 10 may be a terminal, an apparatus in the terminal, or an apparatus that may be used together with a terminal. Or, the communication apparatus 10 may be a network device, an apparatus in the network device, or an apparatus that may be used together with the network device.

When the communication apparatus 10 is a terminal:
the apparatus 10 includes a transceiver module 101 configured to receive configuration information, in which the configuration information is used to indicate at least one neighboring cell and satellite parameters corresponding to the at least one neighboring cell, and the neighboring cell and the satellite parameters corresponding to the neighboring cell include at least one of the following:
parameters required for Reforming a mobility measurement; or
parameters required for performing a handover.

In some embodiments, the parameters required for performing the mobility measurement include at least one of the following:
ephemeris information of a satellite corresponding to the neighboring cell;
an ephemeris information format of the satellite corresponding to the neighboring cell;
a network-controlled common TA;
timer information;
frequency compensation information; or
a polarization mode.

In some embodiments, the parameters required for performing the handover include at least one of the following:
ephemeris information of the satellite corresponding to the neighboring cell;
an ephemeris information format of the satellite corresponding to the neighboring cell;
a common TA;
timer information;
frequency compensation information;
a polarization mode; or
an uplink transmission timing offset K offset.

In some embodiments, the transceiver module 101 is further configured to receive the configuration information from a serving cell or a neighboring cell.

In some embodiments, the transceiver module 101 is further configured to receive first configuration information sent, in a broadcasting manner, by the serving cell, in which the terminal is in an RRC idle state or an RRC-inactive state, and the first configuration information is used to indicate the at least one neighboring cell and the satellite parameters corresponding to the at least one neighboring cell.

Or, the transceiver module 101 is further configured to receive second configuration information sent, based on an RRC signaling, by the serving cell, in which the terminal is in an RRC connected state, and the second configuration information is used to indicate the at least one neighboring cell and the satellite parameters corresponding to the at least one neighboring cell.

In some embodiments, a processing module is configured to perform an RRM measurement on the neighboring cell based on the second configuration information in response to receiving the first configuration information and the second configuration information.

In some embodiments, the transceiver module 101 is configured to receive the configuration information of a neighboring carrier of the neighboring cell.

When the communication apparatus 10 is a network device:
the apparatus 10 includes a transceiver module 101 configured to send configuration information, in which the configuration information is used to indicate at least one neighboring cell and satellite parameters corresponding to the at least one neighboring cell, and the neighboring cell and the satellite parameters corresponding to the neighboring cell include at least one of the following:
parameters required for performing a mobility measurement; or
parameters required for perfomring a handover.

In some embodiments, the parameters required for perfomring the mobility measurement include at least one of the following:
ephemeris information of a satellite corresponding to the neighboring cell;
an ephemeris information format of the satellite corresponding to the neighboring cell;
a network-controlled common TA;
timer information;
frequency compensation information; or
a polarization mode.

In some embodiments, the parameters required for performing the handover include at least one of the following:
ephemeris information of a satellite corresponding to the neighboring cell;
an ephemeris information format of the satellite corresponding to the neighboring cell;
a common TA;
timer information;
frequency compensation information;
a polarization mode; or
an uplink transmission timing offset K offset.

In some embodiments, the transceiver module 101 is further configured to send the configuration information by the serving cell or the neighboring cell.

In some embodiments, the transceiver module 101 is further configured to send first configuration information by the serving cell in a broadcasting manner, in which a terminal is in an RRC idle state or an RRC-inactive state, and the first configuration information is used to indicate the at least one neighboring cell and the satellite parameters corresponding to the at least one neighboring cell; or
send second configuration information by the serving cell through an RRC, in which the terminal is in the RRC connected state, and the second configuration information is used to indicate at least one neighboring cell and the satellite parameters corresponding to the at least one neighboring cell.

In some embodiments, the transceiver module 101 is further configured to send the configuration information by a neighboring cell through a neighboring carrier.

With regard to the communication apparatus 10 according to embodiments, the specific way in which each module performs the operation has been described in detail in method embodiments, which will not be elaborated here. The communication apparatus 10 according to foregoing embodiments of the disclosure has the same or similar beneficial effects as the methods for obtaining informationaccording to embodiments above, which are not described herein again.

As illustrated in FIG. 8, FIG. 8 is a block diagram illustrating another communication apparatus 1000 according to embodiments of the disclosure. The communications apparatus 1000 may be a network device or a terminal, or may be a chip, a chip system, or a processor that supports the network device to implement the foregoing methods, or may be a chip, a chip system or a processor that supports the terminal to implement the foregoing methods. The apparatus may be used to implement the methods described in foregoing method embodiments, and the details may refer to the description of foregoing method embodiments.

The communication apparatus 1000 may include one or more processors 1001. The processor 1001 may be a general-purpose processor or a dedicated processor. For example, the processor 1001 may be a baseband processor or a central processing unit. The baseband processor may be configured to process a communication protocol and communication data, and the central processing unit may be configured to control the communication apparatus (for example, a base station, a baseband chip, a terminal device, a terminal device chip, a D), or a CU), execute a computer program, and process data of a computer program.

In some embodiments, the communications apparatus 1000 may further include one or more memories 1002 on which a computer program 1004 may be stored. The processor 1001 executes the computer program 1004, so that the communications apparatus 1000 executes the methods described in foregoing method embodiments. In some embodiments, the memory 1002 may further store data. The communication apparatus 1000 and the memory 1002 may be separately disposed, or may be integrated together.

In some embodiments, the communication apparatus 1000 may further include a transceiver 1005 and an antenna 1006. The transceiver 1005 may be referred to as a transceiver unit, a transceiver, or a transceiver circuit, and is configured to implement a transceiver function. The transceiver 1005 may include a receiver and a sender. The receiver may be referred to as a receiving unit or a receiving circuit, for implementing a receiving function and the sender may be referred to as a sending unit or a sending circuit, for implementing a sending function.

In some embodiments, the communication apparatus 1000 may further include one or more interface circuits 1007. The interface circuit 1007 is configured to receive code instructions and transmit the code instructions to the processor 1001. The processor 1001 runs the code instructions to cause the communication apparatus 1000 to perform the methods described in foregoing method embodiments.

When the communication apparatus 1000 is a terminal device: the transceiver 1005 is configured to perform the step S21 in FIG. 2; the step S31 in FIG. 3; and the step S41 in FIG. 4; and the processor 1001 is configured to perform the step S42 in FIG. 4.

The communication apparatus 1000 is a network device, and the transceiver 1005 is configured to perform the step S51 in FIG. 5 and the step S61 in FIG. 6.

In an implementation, the processor 1001 may include a transceiver for implementing receiving and sending functions. For example, the transceiver may be a transceiver circuit, an interface, or an interface circuit. The transceiver circuits, the interfaces, or the interface circuits for implementing the receiving and sending functions may be separate or integrated together. The transceiver circuit, the interface, or the interface circuit may be used for reading and writing code/data, or the transceiver circuit, the interface, or the interface circuit may be used for signal transmission.

In an implementation, the processor 1001 may store a computer program 1003. When the computer program 1003 runs on the processor 1001, the communication apparatus 1000 is caused to perform the methods described in foregoing method embodiments. The computer program 1003 may be cured in the processor 1001, and in this case, the processor 1001 may be implemented by hardware.

In an implementation, the communication apparatus 1000 may include a circuit, and the circuit may implement the sending or receiving or communicating functions in foregoing method embodiments. The processor and the transceiver described in the disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus described in above embodiments may be a network device or a terminal, but the scope of the communication apparatus described in the disclosure is not limited thereto. The structure of the communication apparatus may not be limited to that illustrated in FIG. 8. The communication apparatus may be a stand-alone device or may be part of a larger device. For example, the described communication apparatus may be:
(1) a stand-alone IC, a chip, a chip system or a subsystem;
(2) a collection of ICs including one or more ICs, for example the collection of ICs may also include storage components for storing data and computer programs;
(3) an ASIC, such as a modem;
(4) modules that may be embedded in other devices;
(5) a receiver, a terminal device, a smart terminal device, a cellular phone, a wireless device, a handheld machine, a mobile unit, an in-vehicle device, a network device, a cloud device, an artificial intelligence device, and the like; or
(6) others.

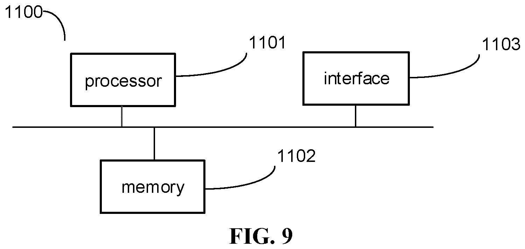

When the communication apparatus is a chip or a chip system, FIG. 9 is a block diagram illustrating a chip according to embodiments of the disclosure.

A chip 1100 includes a processor 1101 and an interface 1103. There may be one or more processors 1101, and there may be more than one interface 1103.

For the case where the chip is used to implement functions of the terminal in embodiments of the disclosure:
the interface 1103 is configured to receive code instructions and transmit the code instructions to the processor; and
the processor 1101 is configured to run the code instructions to perform the methods for obtaining information as described in some embodiments above.

For the case where the chip is used to implement functions of the network device in embodiments of the disclosure:
the interface 1103 is configured to receive code instructions and transmit the code instructions to the processor; and
the processor 1101 is configured to run the code instructions to perform the method for obtaining information as described in some embodiments above.

In some examples, the chip 1100 further includes a memory 1102, and the memory 1102 is configured to store necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of embodiments of the disclosure.

Embodiments of the disclosure further provide a measurement system, including the communication apparatus serving as a terminal and the communication apparatus serving as a network device in foregoing embodiments of FIG. 7. Or the system includes a communication apparatus serving as a terminal and a communication apparatus serving as a network device in foregoing embodiments of FIG. 8.

The disclosure further provides a readable storage medium having instructions stored thereon. When the instructions are executed by a computer, the functions of any of foregoing method embodiments are implemented.

The disclosure further provides a computer program product. When the computer program product is executed by a computer, functions of any of foregoing method embodiments are implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the "first", "second", and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondence shown in tables in the disclosure may be configured, or may be predefined. Value of information in each table is merely an example, and may be configured as other values, which is not limited in the disclosure. When a correspondence of the information and parameters is configured, it is not necessary to configure all correspondences shown in the tables. For example, in the tables in the present disclosure, the correspondence shown in some rows may also be not configured. For another example, appropriate deformation adjustment may be performed based on the foregoing tables, for example, splitting, merging, and the like. Names of titles shown in the foregoing tables may also use other names that may be understood by the communication apparatus, and values or representations of the parameters may also be other values or representations that may be understood by the communication apparatus. When the foregoing tables are implemented, other data structures may be used. For example, an array, a queue, a container, a stack, a linear table, a pointer, a linked list, a tree, a graph, a structure, a class, a heap, a hash table and the like may be used.

Predefining in the disclosure may be understood as defining, pre-defining, storing, pre-storing, pre-negotiating, pre-configuring, curing, or pre-firing.

A person of ordinary skill in the art may be aware that units and algorithm steps of the examples described in connection with embodiments disclosed herein can be implemented by an electronic hardware, or a combination of computer software and an electronic hardware. Whether the functions are performed by hardware or software depends on specific applications and design constraint conditions of the technical solutions. Those skilled in the art may use different methods to implement the described functions for each specific application, but it should not be considered that the implementation goes beyond the scope of the disclosure.

Those skilled in the art may clearly understand that, for the convenience and brevity of description, the described system, apparatus, and specific working process of the unit may refer to a corresponding process in above method embodiments, and details are not described herein again.

The above is merely a specific embodiment of the disclosure, but the protection scope of the disclosure is not limited thereto, and any person skilled in the art may easily conceive of changing or replacing within the technical scope disclosed in the disclosure, and should be covered within the scope of protection of the disclosure. Therefore, the protection scope of the disclosure shall be subject to the protection scope of the claims.

## Claims

1. A method for obtaining information, comprising:
receiving, by a user equipment (UE), configuration information, wherein the configuration information is used to indicate at least one neighboring cell and a satellite parameter corresponding to the at least one neighboring cell; and
wherein the neighboring cell and the satellite parameter corresponding to the neighboring cell comprise at least one of:
a parameter required for performing a mobility measurement; or
a parameter required for performing a handover.

2. The method of claim 1, wherein the parameter required for performing the mobility measurement comprises at least one of:
ephemeris information of a satellite corresponding to the neighboring cell;
an ephemeris information format of the satellite corresponding to the neighboring cell;
a network-controlled common timing advance (TA);
timer information;
frequency compensation information; or
a polarization mode.

3. The method of claim 1, wherein the parameter required for performing the handover comprises at least one of:
ephemeris information of a satellite corresponding to the neighboring cell;
an ephemeris information format of the satellite corresponding to the neighboring cell;
a common timing advance (TA);
timer information;
frequency compensation information;
a polarization mode; or
an uplink transmission timing offset (K_offset).

4. The method of any one of claims 1 to 3, wherein receiving the configuration information comprises:
receiving the configuration information from a severing cell or from the neighboring cell.

5. The method of claim 4, wherein receiving the configuration information from the severing cell comprises:
receiving first configuration information sent, in a broadcasting manner, by the serving cell, wherein the terminal is in a Radio Resource Control (RRC) idle state or an RRC-inactive state, and the first configuration information is used to indicate the at least one neighboring cell and the satellite parameter corresponding to the at least one neighboring cell; or
receiving second configuration information sent, based on an RRC signaling, by the serving cell, wherein the terminal is in an RRC connected state, and the second configuration information is used to indicate at least one neighboring cell and the satellite parameter corresponding to the at least one neighboring cell.

6. The method of claim 5, further comprising:
in response to receiving the first configuration information and the second configuration information, perfmoring a Radio Resource Management (RRM) measurement on the neighboring cell according to the second configuration information.

7. The method of claim 4, wherein receiving the configuration information from the neighboring cell comprises:
receiving the configuration information of a neighboring carrier of the neighboring cell.

8. The method of any one of claims 1 to 7, further comprising:
performing a Radio Resource Management (RRM) measurement on the neighboring cell based on the configuration information.

9. A method for obtaining information, comprising:
sending configuration information by a network device of a Non-Terrestrial Network (NTN), wherein the configuration information is used to indicate at least one neighboring cell and a satellite parameter corresponding to the at least one neighboring cell;
wherein the neighboring cell and the satellite parameter corresponding to the neighboring cell comprise at least one of:
a parameter required for performing a mobility measurement; or
a parameter required for performing a handover.

10. The method of claim 9, wherein the parameter required for performing the mobility measurement comprises at least one of:
ephemeris information of a satellite corresponding to the neighboring cell;
an ephemeris information format of the satellite corresponding to the neighboring cell;
a network-controlled common timing advance (TA);
timer information;
frequency compensation information; or
a polarization mode.

11. The method of claim 9, wherein the parameter required for performing the handover comprises at least one of:
ephemeris information of a satellite corresponding to the neighboring cell;
an ephemeris information format of the satellite corresponding to the neighboring cell;
a common timing advance (TA);
timer information;
frequency compensation information;
a polarization mode; or
an uplink transmission timing offset (K_offset).

12. The method of any one of claims 9 to 11, wherein sending the configuration information comprises:
sending the configuration information by a severing cell or by the neighboring cell.

13. The method of claim 12, wherein sending the configuration information by the severing cell comprises:
sending, by the severing cell, first configuration information sent in a broadcasting manner, wherein the terminal is in a Radio Resource Control (RRC) idle state or an RRC-inactive state, and the first configuration information is used to indicate the at least one neighboring cell and the satellite parameter corresponding to the at least one neighboring cell; or
sending, by the severing cell, second configuration information through an RRC signaling, wherein the terminal is in an RRC connected state, and the second configuration information is used to indicate the at least one neighboring cell and the satellite parameter corresponding to the at least one neighboring cell.

14. The method of claim 12, wherein sending the configuration information by the neighboring cell comprises:
sending, by the neighboring cell, the configuration information through a neighboring carrier.

15. A communication apparatus, applied to a User Equipment (UE) of a Non-Terrestrial Network (NTN), comprising:
a transceiver module, configured to receive configuration information, wherein the configuration information is used to indicate at least one neighboring cell and a satellite parameter corresponding to the at least one neighboring cell, and the neighboring cell and the satellite parameter corresponding to the neighboring cell comprise at least one of:
a parameter required for performing a mobility measurement; or
a parameter required for performing a handover.

16. A communication apparatus, applied to a network side device of a Non-Terrestrial Network (NTN), comprising:
a transceiver module, configured to send configuration information, wherein the configuration information is used to indicate at least one neighboring cell and a satellite parameter corresponding to the at least one neighboring cell, and the neighboring cell and the satellite parameter corresponding to the neighboring cell comprise at least one of:
a parameter required for performing a mobility measurement; or
a parameter required for perforing a handover.

17. A communication apparatus, comprising a processor and a memory, wherein the memory stores a computer program, and when the processor executes the computer program stored in the memory the apparatus is caused to perform the method of any one of claims 1 to 8; or when the processor executes the computer program stored in the memory, the apparatus is caused to perform the method of any one of claims 9 to 14.

18. A communication device, comprising a processor and an interface circuit;
wherein the interface circuit is configured to receive code instructions and transmit the code instructions to the processor; and
the processor is configured to run the code instructions to perform the method of any one of claims 1 to 8; or the processor is configured to run the code instructions to perform the method of any one of claims 9 to 14.

19. A computer-readable storage medium, having computer instructions stored thereon, wherein when the instructions are executed, the method of any one of claims 1 to 8 is performed; or when the instructions are executed, the method of any one of claims 9 to 14 is performed.
